# EUROPÄISCHE PATENTANMELDUNG

(11) **EP 1 795 297 A2**
(43) Veröffentlichungstag der Anmeldung: **13.06.2007**
(21) Anmeldenummer: 06023776.5
(22) Anmeldetag: 15.11.2006
(51) Int. Cl.: B23P 11/00, F16D 25/08, F16D 25/12, B60K 23/02, F16D 48/02

(54) **Verfahren zur Montage eines Maschinenelementes**

(30) Priorität: 09.12.2005 DE 102005058841
(71) Anmelder: LUK LAMELLEN UND KUPPLUNGSBAU BETEILIGUNGS KG, 77815 Bühl (DE)
(72) Erfinder: Rocquet, Stephane, 45640 Sandillon (FR); Chevet, Alexandre, 45650 St. Jean le Blanc (FR)

(57) **Zusammenfassung**

Verfahren zur Montage eines Maschinenelementes (1) in einem Gehäuse (2), wobei das Maschinenelement eine Zuleitung (4,7) umfasst, die in Einbaulage durch eine Öffnung (8) des Gehäuses ragt, dadurch gekennzeichnet, dass die Zuleitung (4,7) vor der Montage mit einer Manschette (9) versehen wird, die in Einbaulage der Zuleitung zwischen der Zuleitung und dem Gehäuse liegt.

## Beschreibung

Die vorliegende Erfindung betrifft ein Verfahren zur Montage eines Maschinenelementes in einem Gehäuse sowie eine Manschette und ein Anschlussstück einer hydraulischen Zuleitung.

Nehmerzylinder von hydraulischen Zentralausrückern werden üblicherweise auf der Innenseite einer Kupplungsglocke montiert, so dass diese nach Montage der Kupplungsglocke nicht mehr zugänglich sind. Üblicherweise ist der Nehmerzylinder mit einem kurzen hydraulischen Anschlussstück versehen, der mit einem aus der Kupplungsglocke durch eine Öffnung herausragenden hydraulischen Stecker verbunden wird . Bei der Montage der vormontierten Einheit bestehend aus Motor und Getriebeglocke wird der Nehmerzylinder über eine hydraulische Leitung mit dem Geberzylinder verbunden, indem eine Kupplung der hydraulischen Leitung auf den Stecker des Anschlussstückes aufgedrückt und verriegelt wird. Zur Montage der hydraulischen Kupplung bestehend aus Stecker und Buchse ist eine axiale Kraft notwendig, um Gegenkräfte der Feder- und Dichtelemente zu überwinden. Bei der Montage des Nehmerzylinders samt hydraulischem Anschlussstück in der Kupplungsglocke treten zwei Probleme auf. Zum einen muss der Teil der Zuleitung, der durch die Öffnung der Kupplungsglocke nach außen ragt, allseits mit Spiel zu den Wänden der Öffnung montiert sein, da bei einer Berührung der hydraulischen Leitung mit den Wänden der Öffnung im Betrieb Verschleiß oder Schäden durch Reibung der Teile aufeinander entstehen kann. Bei der Montage von Stecker und Buchse der hydraulischen Zuleitung ist die zuvor genannte axiale Kraft aufzubringen. Dadurch wird der mit dem Nehmerzylinder verbundene Hydraulikanschluss, der im Wesentlichen nur mit seinem Stecker aus der Kupplungsglocke herausragt, elastisch verformt. Dabei wird der Stecker in die Kupplungsglocke gedrückt. Der Stecker kann dabei soweit in die Kupplungsglocke gedrückt werden, dass die Buchse bei der Montage an der Kupplungsglocke anschlägt und nicht mehr genügend weit auf den Stecker aufgeschoben werden kann, sodass Stecker und Buchse nicht mehr miteinander verriegelt werden können.

Aufgabe der vorliegenden Erfindung ist es daher, ein Verfahren zur Montage, Mittel und Hilfsmittel zur Montage, ein Anschlussstück einer hydraulischen Zuleitung sowie eine Anordnung eines Anschlussstückes an einer Kupplungsglocke anzugeben, die die zuvor genannten Nachteile überwinden.

Das erstgenannte Problem wird gelöst durch ein Verfahren zur Montage eines Maschinenelementes in einem Gehäuse, wobei das Maschinenelement eine Zuleitung umfasst, die in Einbaulage durch eine Öffnung des Gehäuses ragt, wobei die Zuleitung vor der Montage mit einer Manschette versehen wird, die in Einbaulage der Zuleitung zwischen der Zuleitung und dem Gehäuse liegt. In der Einbaulage sind das Maschinenelement und das Gehäuse zu einer Baugruppe zusammengefügt. Die Manschette wird vorzugsweise nach Montage des Maschinenelementes entfernt. Vorzugsweise ist vorgesehen, dass das Maschinenelement ein Nehmerzylinder eines hydraulischen Systems, insbesondere zur Betätigung einer Fahrzeugkupplung eines Kraftfahrzeuges ist. Das Gehäuse ist vorzugsweise eine Kupplungsglocke des Kraftfahrzeuges. Vorzugsweise weist die Manschette und/oder die Zuleitung Mittel zur Festlegung der Manschette an der Zuleitung auf.

Das eingangs genannte Problem wird auch gelöst durch eine Anordnung eines Nehmerzylinders eines hydraulischen Systems, insbesondere zur Betätigung einer Fahrzeugkupplung eines Kraftfahrzeuges, bei der der Nehmerzylinder mit einer Zuleitung verbunden ist, und eine Manschette aufweist, die an der Zuleitung befestigt ist, sowie mit einer Manschette zur Verwendung in dem erfindungsgemäßen Verfahren.

Vorzugsweise ist die Manschette becherförmig nach Art einer Kappe ausgebildet, so dass diese gleichzeitig als Schutzkappe für die hydraulische Zuleitung dienen kann. Dies hat den Vorteil, dass bei montierter Manschette kein Schmutz oder dergleichen in die Hydraulikleitung eindringen kann. Die Manschette weist vorzugsweise an ihrem becherbodenseitigen Ende einen in axialer Richtung veränderlichen Durchmesser auf. Die Manschette ist auf diese Weise kegelstumpfförmig ausgebildet, wobei der Bereich des geringeren Durchmessers zum Ende des hydraulischen Anschlussstückes hin ragt. Die Manschette weist vorzugsweise Mittel zur Festlegung der Manschette an der Zuleitung auf. Bei den Mitteln zur Festlegung der Manschette an der Zuleitung kann es sich vorzugsweise um kraft- und/oder reib- und/oder formschlüssig wirkende Mittel handeln, beispielsweise um einen Schrumpfsitz der Manschette, eine clipsartige Verbindung der Manschette mit entsprechenden Gegenmitteln an der Zuleitung oder dergleichen. Das eingangs genannte Problem wird auch gelöst durch ein Anschlussstück einer hydraulischen Zuleitung, insbesondere einer hydraulischen Zuleitung eines Nehmerzylinders, wobei an diesem Mittel zur Festlegung einer Manschette vorhanden sind.

Das eingangs zweit genannte Problem wird gelöst, indem das Anschlussstück einen Anschlag zur Begrenzung seiner axialen Verschiebung in Richtung der Kupplungsglocke aufweist. Vorzugsweise ist vorgesehen, dass die Zuleitung eine Nase aufweist, die von einem Einschnitt in der Manschette nach Art eines Clips umgriffen wird, wobei die Nase bevorzugt hinter einem Stecker oder einer Steckkupplung des Anschlussstückes angeordnet ist und die Nase in Einbaulage der hydraulischen Zuleitung aus der Kupplungsglocke herausragt.

Das eingangs genannte zweite Problem wird gelöst durch eine Anordnung eines Anschlussstückes an einer Kupplungsglocke, bei dem die Nase so angeordnet ist, dass diese bei einer Verformung der hydraulischen Zuleitung durch Aufbringen einer Kraft in axialer Richtung des Anschlussstückes an der Kupplungsglocke anschlägt und so eine weitere Verformung der hydraulischen Zuleitung begrenzt.

Im Folgenden werden Ausführungsbeispiele der Erfindung anhand der beiliegenden Zeichnungen erläutert.

Dabei zeigen:
- Fig. 1: eine schematische Darstellung einer Kupplungsglocke mit einem Nehmerzylinder und einer erfindungsgemäßen Manschette;
- Fig. 2: eine Detailansicht der Durchführung einer hydraulischen Zuleitung durch eine Öffnung der Kupplungsglocke gemäß Schnitt I-I in Fig. 1;
- Fig. 3: die Ansicht der Fig. 2 nach Entfernen der Manschette;
- Fig. 4: eine schematische Darstellung einer hydraulischen Zuleitung mit einer erfindungsgemäßen Nase;
- Fig. 5: die Funktion der Nase bei Aufschieben einer Buchse einer hydraulischen Kupplung;
- Fig. 6: eine Detailansicht der hydraulischen Kupplung sowie der Nase in Fig. 5.

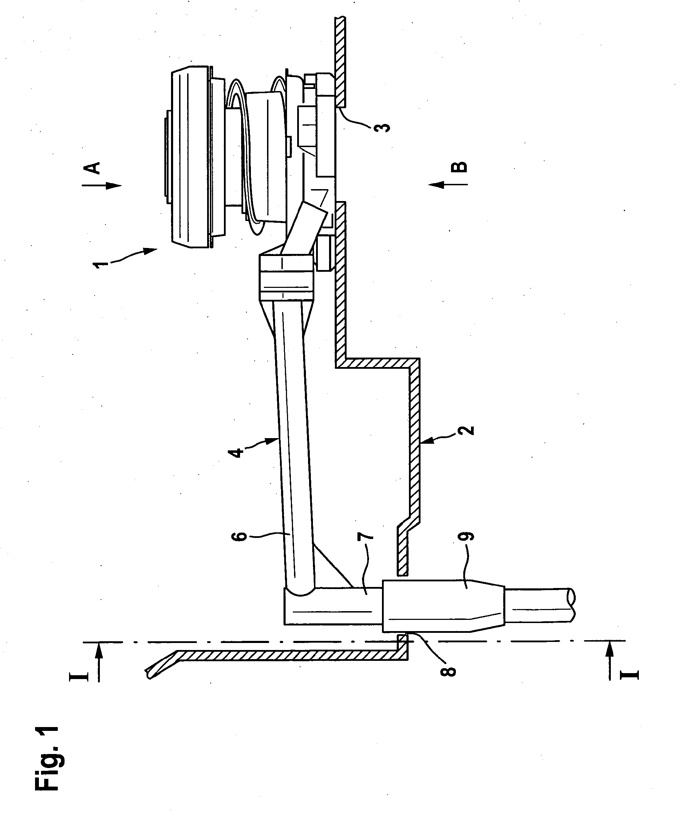

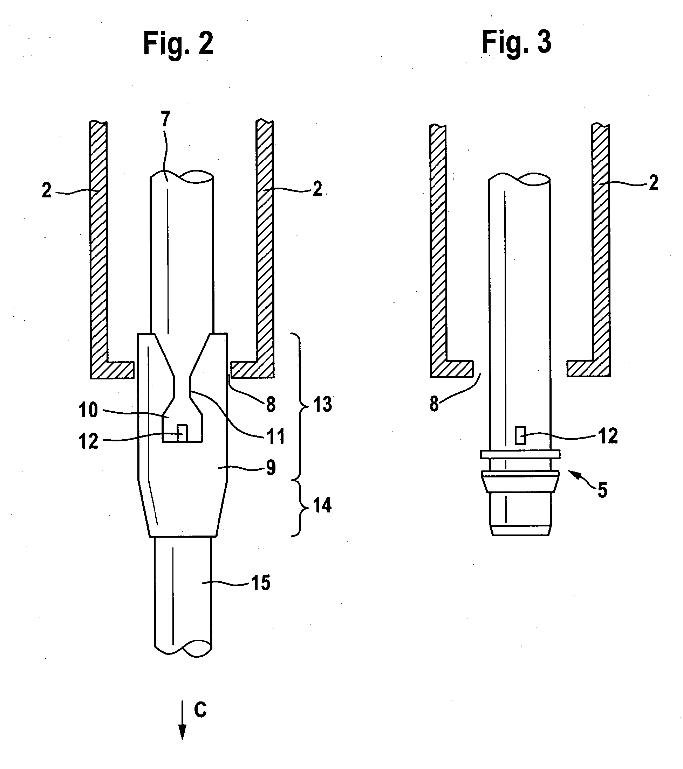

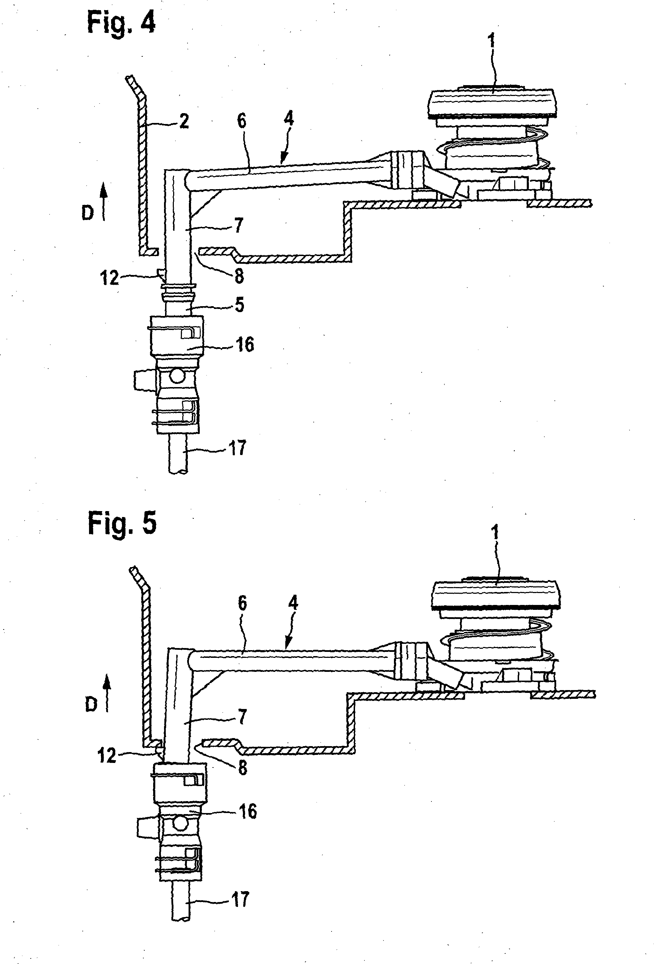

Fig. 1 zeigt eine schematische Darstellung der Anordnung eines Nehmerzylinders 1 an einer Kupplungsglocke 2. Der Nehmerzylinder 1 ist beispielsweise mit nicht dargestellten Schrauben, einem Bajonettverschluss, Klemmmitteln oder anderen Befestigungsmitteln an einer Durchführungsbohrung 3 für eine nicht dargestellte Getriebeeingangswelle eines Getriebes angeordnet. Der Nehmerzylinder 1 betätigt in bekannter Weise ein ebenfalls nicht dargestelltes Ausrücklager einer nicht dargestellten Fahrzeugkupplung im Antriebsstrang eines Kraftfahrzeuges zwischen Kurbelwelle und Getriebeeingangswelle. Der Nehmerzylinder 1 ist verbunden mit einer hydraulischen Zuleitung 4, welche mit einem nicht dargestellten hydraulischen System verbunden ist. Das hydraulische System umfasst insgesamt den Nehmerzylinder, die Hydraulikleitung sowie einen Geberzylinder, der mit einem Fußpedal oder einem elektromechanischen Aktor betätigt werden kann. Durch die Betätigung des Geberzylinders wird das hydraulische System bis hin zum Nehmerzylinder mit Hydraulikdruck beaufschlagt, um so eine Kupplung zu betätigen. Die hydraulische Zuleitung 4 bildet einen Teil der die Nehmerzylinder 1 und Geberzylinder verbindenden Hydraulikleitung. Die hydraulische Zuleitung 4 ist, wie in Fig. 3 dargestellt, mit einem Stecker 5 für eine nicht dargestellte hydraulische Steckverbindung ausgestattet. Auf den Stecker 5 wird eine Buchse 16 wie in Fig. 4 dargestellt zur Verbindung der hydraulischen Zuleitung 4 mit weiteren Leitungsteilen der Hydraulikleitung aufgeschoben werden. Statt eines Steckers 5 kann hier auch eine Steckbuchse angeordnet sein, so dass die Stecker/Buchse Kombination umgekehrt ist. Die hydraulische Zuleitung 4 umfasst ein nehmerzylinderseitiges Zuleitungsteil 6 und ein etwa rechtwinklig dazu angeordnetes Anschlussstück 7. Das Anschlussstück 7 ist durch eine Bohrung 8 in der Kupplungsglocke 2 geführt und ermöglicht so das Anschließen einer Hydraulikkupplung an den Stecker 5. Das Anschlussstück 7 ist lösbar mit einer Manschette 9 verbunden. In Fig. 1 sind der Nehmerzylinder 1 und die Kupplungsglocke 2 in Einbaulage beider Teile dargestellt. Zur Montage werden beide Teile in Richtung der Pfeile A und B zusammengeführt, wobei der abgewinkelte Teil 7 der hydraulischen Zuleitung 4 durch die Bohrung 8 in der Kupplungsglocke 2 hindurch geschoben wird.

Fig. 2 zeigt den Schnitt I-I in Fig. 1 in vergrößerter Darstellung. Zu erkennen sind die Wände der Kupplungsglocke 2 sowie die Bohrung 8, durch die der abgewinkelte Teil 7 der hydraulischen Zuleitung 4 hindurchgeführt ist. Auf den Stecker 5 des Anschlussstücks 7 der hydraulischen Zuleitung 4 ist die Manschette 9 aufgesteckt. Die Manschette 9 ist im Wesentlichen becherförmig gestaltet und weist einen nutartigen Einschnitt 10 auf, der mit beidseits des nutartigen Einschnitts 10 angeordneten Vorsprüngen 11 ein clipsartiges Verbindungsmittel bildet. Die Vorsprünge 11 umgreifen bei auf den Stecker 5 aufgesteckter Manschette 9 einen oder mehrere Nase 12 und bilden so eine formschlüssige lösbare Verbindung zwischen Stecker 5 und Manschette 9. Die Manschette 9 besteht im Wesentlichen aus einem zylindrischen Teil 13 mit im Wesentlichen konstantem Durchmesser sowie einem kegelstumpfförmigen Teil 14, dessen Durchmesser sich zur Spitze hin verjüngt und in einen Boden 15 übergeht. Dadurch ist die Manschette 9 becherförmig gestaltet und schließt den Stecker 5 und damit die hydraulische Zuleitung 4 ab wenn die Manschette 9 aufgesteckt ist. Durch den kegelstumpfförmigen Teil 14 der Manschette 9 wird eine leichte Montage der Anordnung, bestehend aus Nehmerzylinder 1, hydraulischer Zuleitung 4 und Manschette 9 ermöglicht, da die Manschette 9 leicht in die Bohrung 8 eingeführt werden kann und dabei automatisch zentriert wird.

Bei der Montage wird die vormontierte Baugruppe bestehend aus dem Nehmerzylinder 1, der hydraulischen Zuleitung 4 sowie der Manschette 9 in Richtung des Pfeils A in die Kupplungsglocke 2 eingeführt, wobei die Manschette 9 dafür sorgt, dass der abgewinkelte Teil 7 der hydraulischen Zuleitung 4 im Wesentlichen zentrisch in der Bohrung 8 angeordnet ist. Nach dem Einführen wird der Nehmerzylinder 1 mit der Kupplungsglocke 2 verbunden, z.B. verschraubt oder mit ähnlichen Befestigungsmitteln festgelegt. Sodann wird die Manschette 9 in Richtung des Pfeils C in Fig. 2 von dem Stecker 5 abgezogen, so dass sich am Ende die in Fig. 3 dargestellte Einbaulage ergibt. Durch die Montage mit Hilfe der Manschette 9 wird dafür gesorgt, dass der abgewinkelte Teil 7 der hydraulischen Zuleitung 4 die Wände der Bohrung 8 in Einbaulage nicht berührt und daher eine Beschädigung oder ein Verschleiß im Betrieb vermieden wird. Der Innendurchmesser der Bohrung 8 und der Außendurchmesser des zylindrischen Teils 13 der Manschette 9 sind so gewählt, dass ein Abziehen der Manschette 9 von dem Stecker 5 möglich ist, wobei bei einer Clipsverbindung, wie sie im vorliegenden Ausführungsbeispiel dargestellt ist, eine Spielpassung zu bevorzugen ist, die ein Aufweiten des zylindrischen Teils 13 beim Abziehen der Manschette 9 ermöglicht.

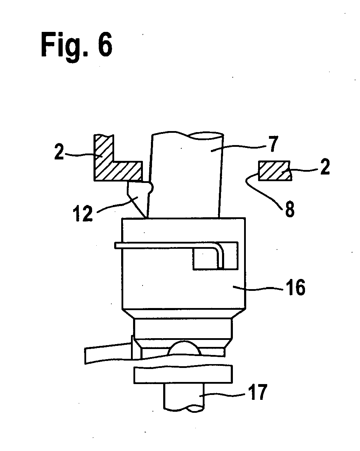

Fig. 4 zeigt die Anordnung des Nehmerzylinders 1 an einer Kupplungsglocke 2, wie in Fig. 1 dargestellt, nach Entfernen der Manschette 9. Zur Verbindung des Nehmerzylinders 1 mit der Hydraulikleitung 17 wird eine Buchse 16 auf den Stecker 5 aufgeschoben. Der Stecker 5 und die Buchse 16 bilden eine hydraulische Kupplung. Die Buchse 16 ist gegen die Kraft einer Feder bzw. einer Dichtung auf den Stecker 5 aufzuschieben, so dass eine axiale Kraft in Richtung des Pfeils D in Fig. 4 auf das Anschlussstück 7 ausgeübt wird. Dadurch wird das nehmerzylinderseitige Zuleitungsteil 6, wie in Fig. 5 dargestellt, gebogen, so dass das Anschlussstück 7 in Richtung des Pfeils D verschoben wird. Die Verschiebung erfolgt in etwa auf einer Kreisbahn mit einem Mittelpunkt in der Nähe der Verbindung zwischen Nehmerzylinder 1 und dem nehmerzylinderseitigen Zuleitungsteil 6. Wie in den Fig. 5 und 6 zu erkennen ist, wird das Anschlussstück 7 dadurch aus einer zentrischen Lage in der Bohrung 8 radial nach außen - in Richtung des Pfeils E - bewegt. Vor dem Stecker 5 ist eine Nase 12 angeordnet, die bei der in Fig. 5 und 6 dargestellten axialen und radialen Verschiebung des Anschlussstückes 7 an der Kupplungsglocke 2 anschlägt. Die Nase 12 ist dazu an der Außenseite - damit ist die Seite gemeint, auf die das Anschlussstück 7 bei der in Fig. 5 und 6 dargestellten Verschiebung in Richtung des Pfeils E und damit auf die Wand der Bohrung 8 zubewegt wird - angeordnet. Das Gesamt-Außenmaß von Anschlussstück 7 und Nase 12 ist dabei so gewählt, dass dies kleiner als der Innendurchmesser der Bohrung 8 ist, so dass das Anschlussstück 7 mitsamt der Nase 12 bei der Montage entsprechend der Darstellung in den Fig. 1 bis 3 durch die Bohrung 8 geschoben werden kann. Die Nase 12 dient gleichzeitig der Befestigung der Manschette 9 wie in den Fig. 1 bis 3 dargestellt. Zur Montage kann die Bohrung 8 auch eine nutartige Ausbuchtung aufweisen, durch die die Nase 12 bei der Montage geführt werden kann. Eine derartige Ausbuchtung ist dabei so angeordnet, dass diese gegenüber der in den Fig. 1 bis 6 dargestellten Einbaulage verdreht ist, so dass die Nase 12 in der in den Fig. 5 und 6 dargestellten ausgelenkten Lage nicht durch die nutartige Ausbuchtung zurückgleiten kann.

### Bezugszeichenliste

- 1: Nehmerzylinder
- 2: Kupplungsglocke/Gehäuse
- 3: Durchführungsbohrung
- 4: Hydraulische Zuleitung
- 5: Stecker
- 6: nehmerzylinderseitiges Zuleitungsteil
- 7: Anschlussstück an hydraulische Zuleitung
- 8: Bohrung
- 9: Manschette
- 10: nutartiger Einschnitt
- 11: Vorsprung
- 12: Nase
- 13: zylindrischer Teil
- 14: kegelstumpfförmiger Teil
- 15: Boden
- 16: Buchse
- 17: Hydraulikleitung

- A, B C, D E: Richtungspfeile

## Patentansprüche

1. Verfahren zur Montage eines Maschinenelementes (1) in einem Gehäuse (2), wobei das Maschinenelement (1) eine Zuleitung (4, 7) umfasst, die in Einbaulage durch eine Öffnung (8) des Gehäuses (2) ragt, **dadurch gekennzeichnet, dass** die Zuleitung (4, 7) vor der Montage mit einer Manschette (9) versehen wird, die in Einbaulage der Zuleitung (4, 7) zwischen der Zuleitung (4, 7) und dem Gehäuse (2) liegt.

2. Verfahren nach Anspruch 1, **dadurch gekennzeichnet, dass** die Manschette (9) nach der Montage des Maschinenelementes (1) entfernt wird.

3. Verfahren nach Anspruch 1 oder 2, **dadurch gekennzeichnet, dass** das Maschinenelement ein Nehmerzylinder (1) eines hydraulischen Systems insbesondere zur Betätigung einer Fahrzeugkupplung eines Kraftfahrzeuges ist.

4. Verfahren nach Anspruch 1, **dadurch gekennzeichnet, dass** das Gehäuse eine Kupplungsglocke (2) ist.

5. Anordnung eines Nehmerzylinders (1) eines hydraulischen Systems, insbesondere zur Betätigung einer Fahrzeugkupplung eines Kraftfahrzeuges, wobei der Nehmerzylinder (1) mit einer Zuleitung (4, 7) verbunden ist, und einer Manschette (9), die an der Zuleitung (4, 7) befestigt ist.

6. Manschette zur Verwendung in einem Verfahren nach den Ansprüchen 1 bis 4.

7. Manschette nach dem vorhergehenden Anspruch, **dadurch gekennzeichnet, dass** diese becherförmig (13, 15) ausgebildet ist.

8. Manschette nach Anspruch 6 oder 7, **dadurch gekennzeichnet, dass** die Manschette (9) an ihrem becherbodenseitigen Ende einen in axialer Richtung veränderlichen Durchmesser (13) aufweist.

9. Manschette nach einem der Ansprüche 6 bis 8 **dadurch gekennzeichnet, dass** diese Mittel (10, 11) zur Festlegung der Manschette an der Zuleitung (4, 7) aufweist.

10. Manschette nach Anspruch 9, **dadurch gekennzeichnet, dass** die Mittel (10, 11) zur Festlegung der Manschette an der Zuleitung kraft- und/oder reib- und/oder formschlüssig wirken.

11. Anschlussstück einer hydraulischen Zuleitung, insbesondere einer hydraulischen Zuleitung eines Nehmerzylinders (1), **dadurch gekennzeichnet, dass** dieses Mittel (11) zur Festlegung einer Manschette (9) aufweist.

12. Anschlussstück einer hydraulischen Zuleitung (4), insbesondere einer hydraulischen Zuleitung (4) eines Nehmerzylinders (1), **dadurch gekennzeichnet, dass** dieses einen Anschlag (12) zur Begrenzung seiner axialen Verschiebung in Richtung (D) der Kupplungsglocke (2) aufweist.

13. Anschlussstück nach Anspruch 11, **dadurch gekennzeichnet, dass** dieses Mittel als Nase (12) ausgebildet ist.

14. Anschlussstück nach dem vorhergehenden Anspruch, **dadurch gekennzeichnet, dass** die Nase (12) hinter einem Stecker (5) oder einer Steckkupplung des Anschlussstückes (7) angeordnet ist.

15. Anschlussstück nach den Ansprüchen 12 und 13, **dadurch gekennzeichnet, dass** die Nase (12) in Einbaulage der hydraulischen Zuleitung (4) aus der Kupplungsglocke (2) herausragt.

16. Anordnung eines Anschlussstückes nach den Ansprüchen 11,12 und 13 an einer Kupplungsglocke (2), **dadurch gekennzeichnet, dass** die Nase (12) so angeordnet ist, dass diese bei einer Verformung der hydraulischen Zuleitung (4, 6, 7) durch Aufbringen einer Kraft in axialer Richtung (D) des Anschlussstückes (7) an der Kupplungsglocke (2) anschlägt und so eine weitere Verformung der hydraulischen Zuleitung (4, 6, 7) begrenzt.
